# EUROPÄISCHE PATENTSCHRIFT

(11) **EP 1 916 091 B1**
(45) Veröffentlichungstag und Bekanntmachung des Hinweises auf die Patenterteilung: **08.07.2009**
(21) Anmeldenummer: 07020553.9
(22) Anmeldetag: 20.10.2007
(51) Int. Cl.: B29C 70/44, B29C 65/00

(54) **Verfahren zur Herstellung von Faserverbundbauteilen**
Method for manufacturing composite fibrous components
Procédé de fabrication d'éléments composites en fibre

(30) Priorität: 26.10.2006 DE 102006050579
(43) Veröffentlichungstag der Anmeldung: 30.04.2008
(73) Patentinhaber: Deutsches Zentrum für Luft- und Raumfahrt e.V., 51147 Köln (DE)
(72) Erfinder: Kaps, Robert, 38108 Braunschweig (DE); Herbeck, Lars, Dr.-Ing., 38173 Feldheim (DE)
(74) Vertreter: Rehberg Hüppe + Partner

(56) Entgegenhaltungen:
- EP-A- 1 484 164
- DE-A1- 10 156 123
- US-A- 5 876 546
- US-A- 6 048 488

## Beschreibung

### TECHNISCHES GEBIET DER ERFINDUNG

Die Erfindung bezieht sich auf ein Verfahren zur Herstellung eines zusammenhängenden Faserverbundbauteils mit den Merkmalen des Oberbegriffs des unabhängigen Patentanspruchs 1.

### STAND DER TECHNIK

Ein Verfahren zur Herstellung eines zusammenhängenden Faserverbundbauteils ist beispielsweise aus der EP 1 400 341 B1 bekannt. Dabei wird ein Bereich des Faserverbundbauteils aus einem so genannten Prepreg-Halbzeug aufgebaut, während ein hieran angrenzender Bereich aus einem so genannten Preform-Halbzeug aufgebaut wird. Während ein Prepreg-Halbzeug Fasern aufweist, die bereits mit einem zur Ausbildung der Matrix des Faserverbundbauteils benötigten Harz getränkt sind, muss in ein Preform-Halbzeug noch Harz injiziert werden, bevor die beiden Bereiche in einer gemeinsamen thermischen Behandlung ausgehärtet werden können. Für das Injizieren des Harzes in das Preform-Halbzeug, aber auch um das Prepreg-Halbzeug von Lufteinschlüssen zu befreien, ist es üblich, einen Raum, der beide aneinandergrenzenden Bereiche einer Vorform des Faserverbundbauteils umfasst und von einem Vakuumsack abgedeckt ist, zu evakuieren. Dabei besteht jedoch die Gefahr, dass das Harz aus dem Prepreg-Halbzeug in das Preform-Halbzeug hinein ausblutet. Hierdurch kann es dem Prepreg-Halbzeug später an Harz fehlen. Außerdem kann es im Bereich des Preform-Halbzeugs zu einem räumlich undefinierten Übergang zwischen dem Harz des Prepreg-Halbzeugs und dem Harz kommen, das in das Preform-Halbzeug injiziert wird. Dies kann zu Problemen beispielsweise bei der Zulassung von Flugzeugbauteilen führen, die auf definierten Produktspezifikationen zu basieren hat. Zudem müssen das Harz des Prepreg-Halbzeugs und das Harz, das in das Preform-Halbzeug injiziert wird, voll kompatibel sein und sich miteinander verbinden, damit die Bereiche des Prepreg-Halbzeugs und des Preform-Halbzeugs bei dem fertigen Faserverbundbauteil dauerhaft aneinander hängen. Hierdurch sind viele Harzkombinationen wie zum Beispiel Polyesterharz einerseits und Epoxidharz andererseits ausgeschlossen. Zur Verstärkung des Übergangs zwischen den Bereichen des Prepreg-Halbzeugs und des Preform-Halbzeugs ist es bekannt, zusätzliche mechanische Verbindungselemente vorzusehen, die aus dem einen Bereich in den anderen Bereich herüberreichen. Aus der EP 1 400 341 B1 ist es weiterhin bekannt, einen Klebstofffilm zwischen dem Prepreg-Halbzeug und dem Preform-Halbzeug vorzusehen, um die Bindung zwischen den beiden Bereichen zu verbessern.

Aus der EP 1 444 090 B1 ist ein weiteres Verfahren zur Herstellung eines zusammenhängenden Faserverbundbauteils bekannt. Auch hierbei werden die beiden aneinander angrenzenden Bereiche aus einem Prepreg-Halbzeug einerseits und einem trockenen Textil-Halbzeug, d. h. einem Preform-Halbzeug, andererseits ausgebildet, die abschnittsweise aneinander anliegen. Als Besonderheit werden hier mittels gasdurchlässiger Membranen eine erste Kammer um das Prepreg-Halbzeug und eine zweite Kammer um das Preform-Halbzeug ausgebildet, wobei eine Injektionsleitung zur Injektion des Harzes in die Kammer mit dem Textil-Halbzeug mündet. Dabei soll es auch möglich sein, dass die Oberfläche des Preform-Halbzeugs oder des Prepreg-Halbzeugs die Grenze der einen oder anderen Kammer bildet, und die die Kammern definierende Membranen, die in jedem Fall gasdurchlässig sind, sollen nicht nur harzdurchlässig sondern auch harzundurchlässig sein können. Es ist aber nicht erläutert, wie eine harzundurchlässige Membran durch Teile des Prepreg-Halbzeugs oder des Preform-Halbzeugs ausgebildet werden könnte.

Ein Verfahren zur Herstellung eines zusammenhängenden Faserverbundbauteils mit den Merkmalen des Oberbegriffs des unabhängigen Patentanspruchs 1 ist aus der US 6,048,488 A bekannt. Dieses Verfahren wird als CIRTM (co-injection resin transfer molding) bezeichnet. Bei diesem Verfahren wird eine Übergangsfolie zwischen den aneinander angrenzenden Bereichen angeordnet, die zwei Preform-Halbzeuge in den aneinander angrenzenden Bereichen voneinander trennt, damit Harze zum Infiltrieren der beiden Preform-Halbzeuge im Rahmen der gemeinsamen thermischen Behandlung auf unterschiedliche Weise in die beiden aneinander angrenzenden Bereiche injiziert werden können. Dieses Verfahren ist für komplexe Strukturen in beiden aneinander angrenzenden Bereichen geeignet. Für einen einfach strukturierten großflächigen Bereich auf einer Seite der Übergangsfolie ist die Ausbildung auf Basis eines Preform-Halbzeugs jedoch sehr aufwändig.

### AUFGABE DER ERFINDUNG

Der Erfindung liegt die Aufgabe zugrunde, ein Verfahren zur Herstellung eines zusammenhängenden Faserverbundbauteils mit den Merkmalen des Oberbegriffs des unabhängigen Patentanspruchs aufzuzeigen, das insbesondere für komplexere Anbauten an ansich einfach strukturierte großflächige Bereiche geeignet ist.

### LÖSUNG

Die Aufgabe der Erfindung wird durch ein Verfahren zur Herstellung eines zusammenhängenden Faserverbundbauteils mit den Merkmalen des unabhängigen Patentanspruchs 1 gelöst. Bevorzugte Ausführungsbeispiels des neuen Verfahrens sind in den abhängigen Patentansprüchen 2 und 3 beschrieben.

### BESCHREIBUNG DER ERFINDUNG

Bei dem neuen Verfahren ist zwischen den Bereichen, die unterschiedlich aufgebaut werden, womit hier jegliche Unterschiede im Aufbau und nicht nur ein Prepreg-Halbzeug einerseits und ein Preform-Halbzeug andererseits gemeint sind, eine Übergangsfolie angeordnet. Mit einer Übergangsfolie ist hier eine solche Folie gemeint, die die beiden angrenzenden Bereiche mit unterschiedlichem Aufbau auch bei dem fertigen Faserverbundbauteil räumlich voneinander trennt. Gleichzeitig stellt die Übergangsfolie aber eine dauerhafte Verbindung zwischen den beiden angrenzenden Bereichen bereit. Hierzu weist sie eine Zusammensetzung auf, die sich zwar von den Zusammensetzungen der Matrizen beider angrenzenden Bereiche unterscheidet, die aber bei der gemeinsamen thermischen Behandlung dauerhafte Verbindungen mit den Matrizen beider angrenzender Bereiche eingeht. Die beiden angrenzenden Bereiche können so insbesondere in Bezug auf die Zusammensetzung der ihre Matrizen ausbildenden Harze völlig unabhängig voneinander aufgebaut werden. Es muss auf keine Kompatibilitäten zwischen den Harzen Rücksicht genommen werden, solange sie jeweils dauerhafte Verbindungen mit der Übergangsfolie eingehen können.

Die Übergangsfolie unterbindet nicht nur einen Übertritt von Harz zwischen den beiden angrenzenden Bereichen unterschiedlichen Aufbaus zumindest im Wesentlichen, sondern ist darüber hinaus auch vakuumdicht. Die Vakuumdichtigkeit der Übergangsfolie ermöglicht völlig getrennte Schritte beim Aufbauen der beiden angrenzenden Bereiche vor der abschließenden gemeinsamen thermischen Behandlung. So können das Prepreg- und das Preform-Halbzeug zu unterschiedlichen Zeitpunkten in den beiden Bereichen angeordnet, evakuiert, ggf. mit Harz infiltriert und auch durch thermische Vorbehandlung vorgehärtet werden. Neben gänzlich unterschiedlichen Zusammensetzungen der Harze auf beiden Seiten der Übergangsfolie sind auch gänzlich unterschiedliche Unterdruckniveaus, beispielsweise ein niedriges Unterdruckniveau zum Ausgasen eines großen Prepreg-Halbzeugs einerseits und ein hohes Unterdruckniveau zum Vorbereiten der Infiltration eines kleineren Preform-Halbzeugs andererseits, möglich. Durch die Aufteilung der Herstellung des Faserverbundbauteils auf einzelne trennbare Schritte wird die Komplexität der Herstellung insgesamt deutlich reduziert.

Teile der Übergangsfolie, die zunächst über den Kontaktbereich mit den beiden angrenzenden Bereichen überstehen, können nach der gemeinsamen thermischen Behandlung entfernt werden. Dort wo die Übergangsfolie wieder entfernt werden soll, muss zwischen ihr und den nur einseitig an sie angrenzenden Bereich eine Trennfolie oder so genanntes Abreißgewebe angeordnet werden.

Wie bereits mehrfach angesprochen wurde, ist die Übergangsfolie auch bei dem fertigen Faserverbundbauteil zwischen den aneinander angrenzenden unterschiedlich aufgebauten Bereichen erkennbar vorhanden.

Die Übergangsfolie kann ihrerseits faserverstärkt sein, um beispielsweise unterschiedlichen Drücken auf ihren beiden Seiten auch bei höheren Temperaturen besser widerstehen zu können. Dabei können die Verstärkungsfasern der Übergangsfolie über deren Oberflächen überstehen, um eine zusätzliche Anbindungsmöglichkeit an die Matrizen der beiden angrenzenden Bereiche bereitzustellen.

Die Übergangsfolie ist zumindest an ihren Oberflächen vorzugsweise aus amorphen Thermoplasten ausgebildet. Von einigen amorphen Thermoplasten ist es bekannt, dass sie gute Bindungen mit den üblicherweise für Faserverbundbauteile verwendeten chemisch härteren Harzen eingehen.

Konkret kann die Übergangsfolie an ihren Oberflächen aus PEI (Polyetherimid) ausgebildet sein. PEI wird durch viele übliche Harze zur Herstellung von Faserverbundbauteilen angelöst, woraufhin es zum wechselseitigen Eindiffundieren und Ausbilden einer Mischzone kommt, die nach ihrem Aushärten eine dauerhafte Verbindung bereitstellt.

Die beiden den beiden angrenzenden Bereichen zugewandten Oberflächen der Übergangsfolie müssen nicht gleich zusammengesetzt sein. Vielmehr sind hier auch unterschiedliche Zusammensetzungen möglich, um die Übergangsfolie an Matrizen unterschiedlicher Zusammensetzungen in den beiden Bereichen optimal anzupassen. Dadurch ist es möglich, auf beiden Seiten der Übergangsfolie völlig unterschiedliche Harze, wie beispielsweise Polyesterharz einerseits und ein Epoxidharz andererseits, einzusetzen, die zwar untereinander nicht, aber jeweils mit der Zusammensetzung der Übergangsfolie an deren ihnen zugewandeten Oberfläche kompatibel sind, und dennoch eine dauerhafte Verbindung der beiden an die Übergangsfolie angrenzenden Bereiche bei dem fertigen Faserverbundbauteil zu erzielen.

In einer Mittelschicht ist die Übergangsfolie, um neben einer hohen Festigkeit auch eine hohe Beständigkeit gegenüber der Anlösung durch die Harze aus den angrenzenden Bereichen zu erreichen, vorzugsweise aus PEEK ausgebildet. PEEK ist ein hochwertiger Kunststoff, der als hochbeständig bekannt ist und dessen Einsatz häufig nur aus Kostengründen unterbleibt. Bei der vorliegenden Erfindung wird dieser hochwertige Kunststoff an entscheidender Stelle, aber nur in geringer Menge eingesetzt, um die Integrität der Übergangsfolie während der thermischen Behandlung zur Aushärtung der Harze zu maximieren.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Figuren 7 bis 11 näher erläutert und beschrieben. Die anderen Figuren betreffen nicht unter die Patentansprüche fallende Verfahren, die zum besseren Verständnis der Erfindung beschrieben werden.
- **Fig. 1**: zeigt einen Schnitt durch die Vorform eines Faserverbundbauteils mit zwei aneinander angrenzenden Bereichen aus einen Prepreg-Halbzeug einerseits und einem Preform-Halbzeug andererseits.
- **Fig. 2**: zeigt schematisch einen ersten Schritt einer thermischen Behandlung zum Aushärten des Faserverbundbauteils.
- **Fig. 3**: zeigt schematisch einen zweiten Schritt der thermischen Behandlung zum Aushärten des Faserverbundbauteils.
- **Fig. 4**: zeigt schematisch das Entformen des fertigen Faserverbundbauteils; und
- **Fig. 5**: zeigt einen Schnitt durch eine alternative Vorform eines Faserverbundbauteils mit zwei aneinander angrenzenden Bereichen aus Preform-Halbzeugen.
- **Fig. 6**: zeigt einen Schnitt durch eine weitere alternative Vorform eines Faserverbundbauteils zwar wie in Fig. 1 mit zwei aneinander angrenzenden Bereichen aus einen Prepreg-Halbzeug einerseits und einem Preform-Halbzeug andererseits, aber mit einer anderen Abgrenzung der beiden Bereiche gegeneinander.
- **Fig. 7 bis 10**: zeigen in vier Schritten die erfiindungsgemäße Ausbildung einer Vorform eines Faserverbundbauteils wieder wie in Fig. 1 mit zwei aneinander angrenzenden Bereichen aus einen Prepreg-Halbzeug einerseits und einem Preform-Halbzeug andererseits; und
- **Fig. 11**: zeigt schematisch die thermische Behandlung zum Aushärten des Faserverbundbauteils aus der Vorform gemäß Fig. 10.

### FIGURENBESCHREIBUNG

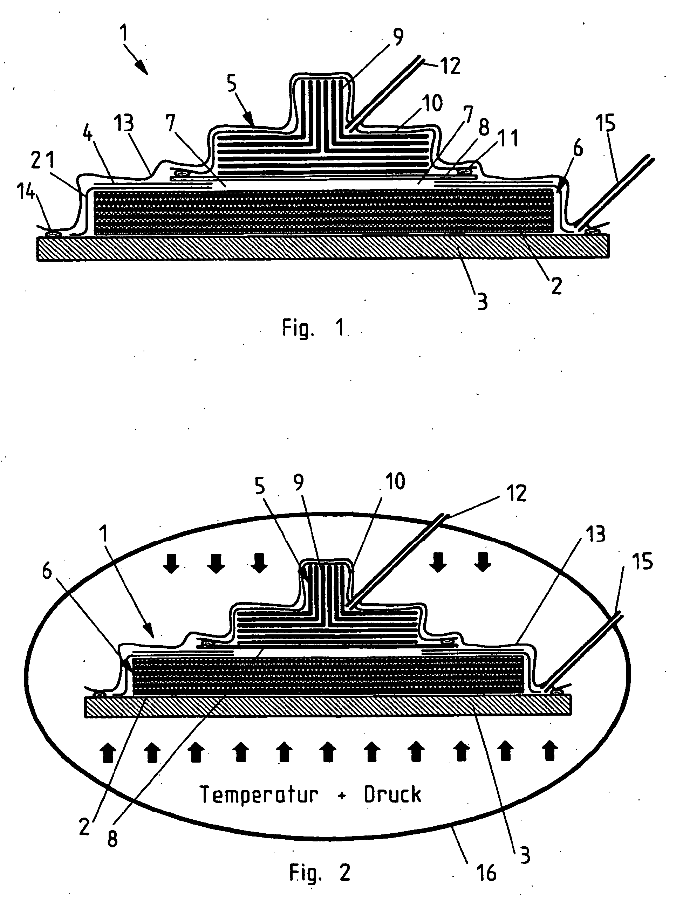

Bei der Vorform 1 für ein Faserverbundbauteil gemäß **Fig. 1** ist ein Prepreg-Halbzeug 2 auf einem Werkzeug 3 angeordnet. Auf dem Prepreg-Halbzeug 2 sind ein Abreißgewebe 21 und eine Trennfolie 4 angeordnet, die in einem Kontaktbereich zu einem anderen Bereich 5 als dem Bereich 6 des Prepreg-Halbzeugs 2 Ausschnitte 7 aufweisen. Die Ausschnitte 7 vollständig überdeckend ist auf der Trennfolie 4 eine Übergangsfolie 8 angeordnet. Auf der Übergangsfolie 8 ist in dem Bereich 5, der ganz über dem Ausschnitt 7 liegt, ein Preform-Halbzeug 9 angeordnet. Der Bereich 5 des Preform-Halbzeugs 9 ist mit einer vakuumdichten Membran 10 über eine umlaufende Dichtung 11 gegenüber der Übergangsfolie 8 abgedichtet. Da auch die Übergangsfolie 8 vakuumdicht ist, kann der Bereich 5 über einen Anschluss 12 separat evakuiert werden. Über der gesamten Vorform 1 auf dem Werkzeug 3 ist ein Vakuumsack 13 angeordnet, der über eine umlaufende Dichtung 14 gegenüber dem seinerseits vakuumdichten Werkzeug 3 abgedichtet ist. Über einen Anschluss 15 kann der so begrenzte Innenraum evakuiert werden, bei dem es sich effektiv um den Bereich 6 des Prepreg-Halbzeugs 2 handelt.

**Fig. 2** zeigt schematisch die auf dem Werkzeug 3 unter dem Vakuumsack 13 in einen Autoklaven 16 eingebrachte Vorform 1. In dem Autoklaven 16 herrschen erhöhte Temperatur und erhöhter Druck. Durch gleichzeitiges Evakuieren der Bereiche 5 und 6 über die Anschlüsse 12 und 15 wird die Druckdifferenz über den Vakuumsack 13 bzw. die Membran 10 nicht nur erhöht, sondern es wird auch Gas aus den Bereichen 5 und 6 entfernt, das den Aufbau des gewünschten Faserverbundbauteils stören würde. In dem Bereich 6 reicht dabei ein geringerer Unterdruck zum Entfernen von überschüssigem Gas, das vorwiegend aus Lufteinschlüssen zwischen einzelnen Prepreg-Lagen stammt, um dort eine durch Fasern verstärkte Kunststoffmatrix auszubilden, weil das Prepreg-Halbzeug 2 neben Verstärkungsfasern bereits ein Harz zur Ausbildung der Matrix aufweisen. Demgegenüber weisen die Verstärkungsfasern des Preform-Halbzeugs 9 kein oder jedenfalls nicht ausreichende Mengen an Harz für die Matrixbildung auf. Daher muss der Bereich 5 zunächst bis auf einen größeren Unterdruck evakuiert werden, bevor über den Anschluss 12 oder einen anderen Anschluss Harz 22 injiziert werden kann, um das zuvor erzeugte Vakuum wieder aufzufüllen.

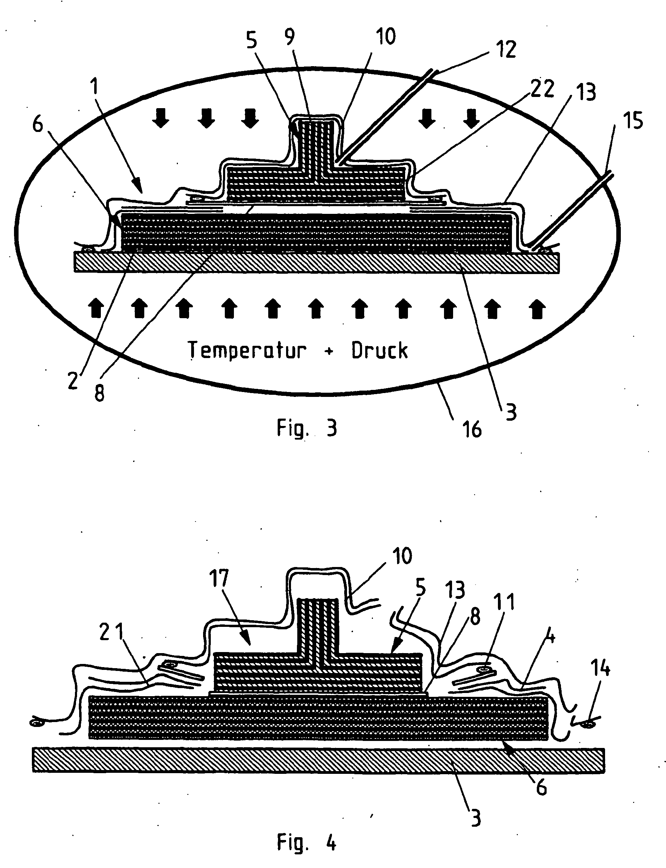

Im Rahmen der weiteren thermischen Behandlung, die in Fig. 3 angedeutet ist härtet dieses Harz 22 dann in dem Autoklaven 16 ebenso wie das Harz in dem Bereich 6 zu einer faserverstärkten Matrix aus. Zusätzlich werden bei der thermischen Behandlung Verbindungen zwischen der Übergangsfolie 8 und den an sie angrenzenden Bereichen 5 und 6 geschaffen, indem die Übergangsfolie dauerhafte Verbindungen mit den Matrizen beider angrenzender Bereiche 5 und 6 eingeht. Um diese Verbindungen eingehen zu können, besteht die Matrix der Übergangsfolie 8 zumindest an ihrer Oberfläche aus amorphem Thermoplasten, insbesondere PEI (Polyetherimid).

**Fig. 4** zeigt das Entformen des fertigen Faserverbundbauteils 17 nach der thermischen Behandlung in dem Autoklaven 16. Die Anschlüsse 12 und 15 sind bereits entfernt worden. Weiterhin entfernt werden der Vakuumsack 13 und die Membran 10 sowie die Dichtungen 11 und 14. Zusätzlich werden die oberhalb der Trennfolie 4 befindlichen Teile der Übergangsfolie 8, die sich entsprechend nicht mit dem angrenzenden Bereich 6 verbunden haben, abgeschnitten und gemeinsam mit der Trennfolie 4 entfernt. Anschließend kann das Faserverbundbauteil 17 frei von dem Werkzeug 3 entfernt werden. Bei dem Faserverbundbauteil 17 hängen die Bereiche 5 und 6 über die Übergangsfolie 8 dauerhaft zusammen.

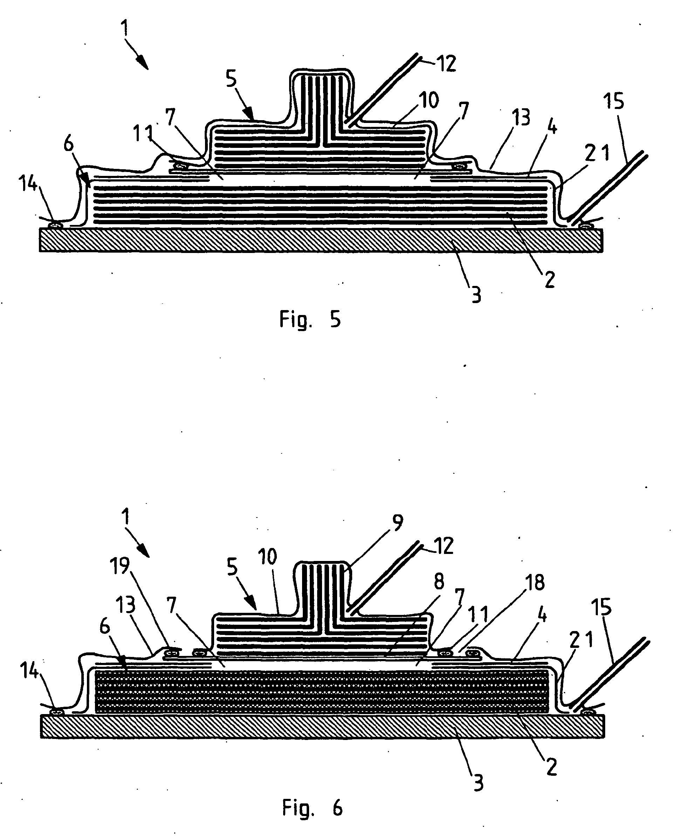

Die in **Fig. 5** skizzierte Vorform 1 ist grundsätzlich wie die Vorform 1 gemäß Fig. 1 aufgebaut, nur dass hier auch in dem Bereich 6 ein Preform-Halbzeug 20 vorliegt, dass für das Infiltrieren mit einem Harz vorgesehen ist. Dieses Harz kann sich zum Beispiel hinsichtlich seiner Zusammensetzung von dem Harz 22 zum Infiltrieren des Preform-Halbzeugs in dem Bereich 5 unterscheiden.

Bei der in **Fig. 6** skizzierten Vorform 1, die wie die Vorform 1 gemäß Fig. 1 ein Prepreg-Halbzeug 2 aufweist, überdeckt der Vakuumsack 13 im Gegensatz zu Fig. 1 neben dem Bereich 6 nicht auch den Bereich 5, sondern er weist für den Bereich 5 einen Ausschnitt 18 auf, um den herum er über eine Dichtung 19 gegenüber der Übergangsfolie 8 abgedichtet ist. Diese Vorgehensweise erleichtert gerade bei sehr großflächigen, weitgehend ebenen Bereichen 6 die glatte Abdeckung mit dem Vakuumsack 13, auch wenn einzelne den ebenen Verlauf des Bereichs 6 störende Bereiche 5 vorgesehen sind. Bei der Vorform 1 sind entsprechend zwei völlig getrennte Evakuierungsbereiche in Form der Bereiche 5 und 6 vorgesehen, die jeweils teilweise durch die Übergangsfolie 8 begrenzt und im Bereich des Ausschnitts 7 durch die Übergangsfolie 8 auch gegeneinander abgegrenzt sind.

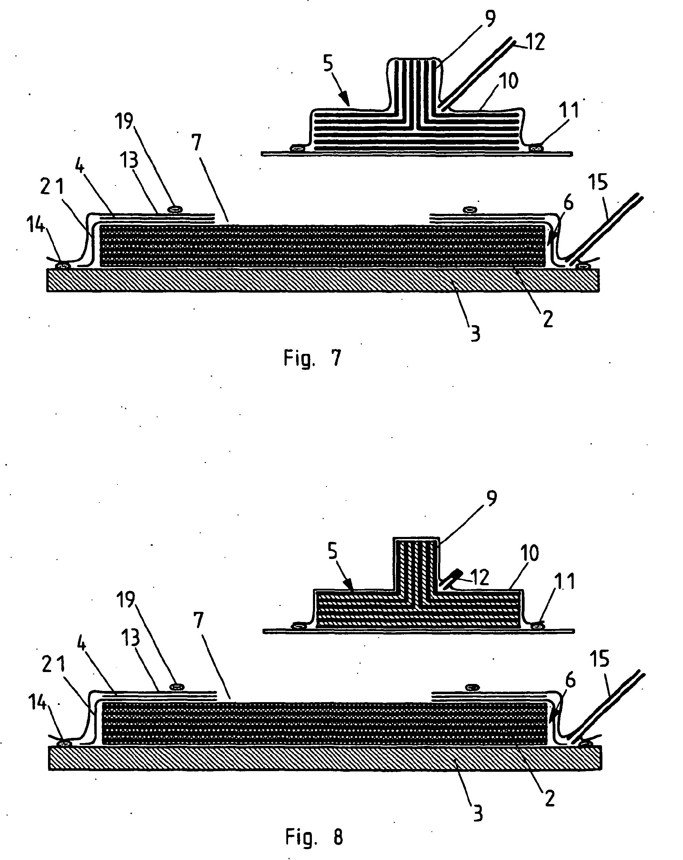

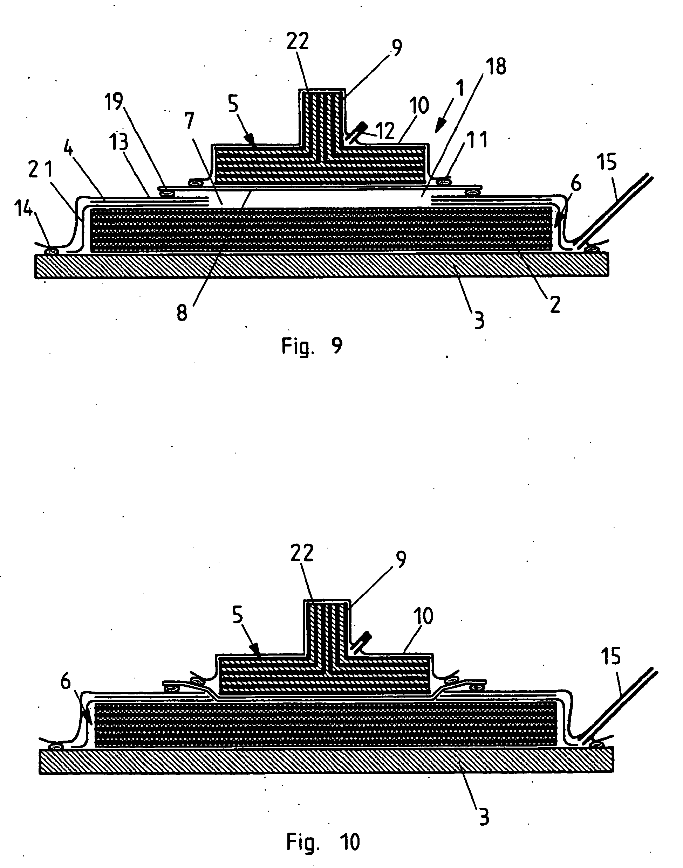

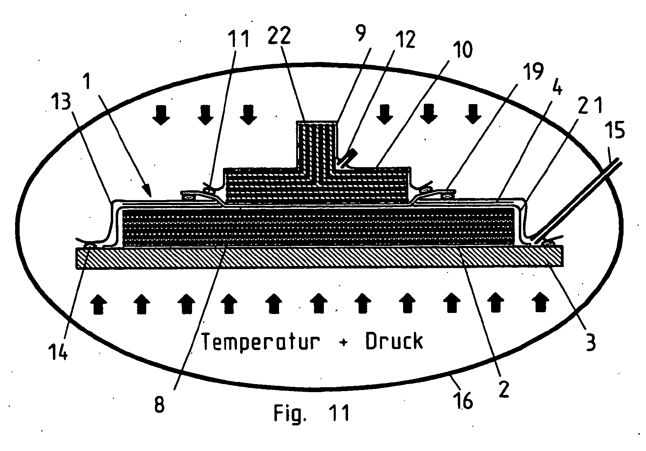

So kann der Bereich 6 auch schon evakuiert und ggf. vorgehärtet werden, bevor er mit dem Bereich 5 zusammengesetzt wird. Dies ist in den folgenden **Fig. 7 bis 10** skizziert. Fig. 7 zeigt dabei, wie der Bereich 5 zunächst eigenständig aus dem Preform-Halbzeug 9 ausgebildet und mit der Übergangsfolie 8 und der Membran 10 unter Zwischenordnung der Dichtung 11 umschlossen wird. So kann der Bereich 5 für sich genommen evakuiert und mit dem Harz 22 infiltriert werden, was in Fig. 8 angedeutet ist. Es kann auch bereits eine Temperaturbehandlung des Bereichs 5 zur Voraushärtung des Harzes 12 erfolgen. Erst hieran anschließend werden gemäß den Figuren 9 und 10 die Bereiche 5 und 6 zusammengebracht und aneinander angefügt. Damit wird dann auch der durch den Ausschnitte 18 in dem Vakuumsack 13 zunächst noch offene Bereich 6 abgedichtet, so dass er bei der anschließenden thermischen Behandlung in dem Autoklaven 16 gemäß Fig. 11 zur Entfernung von überschüssiger Luft evakuiert werden kann. Die anhand den Fig. 7 bis 11 geschilderte Vorgehensweise erlaubt es, komplexere Anbauten an ansich einfach strukturierte großflächige Bereiche 6 zunächst einzeln vorzubereiten und erst vor der abschließenden thermischen Behandlung in dem Autoklaven 16 mit dem Bereich 6 zu verbinden.

### BEZUGSZEICHENLISTE

- 1: Vorform
- 2: Prepreg-Halbzeug
- 3: Werkzeug
- 4: Abreißgewebe
- 5: Bereich
- 6: Bereich
- 7: Ausschnitt
- 8: Übergangsfolie
- 9: Preform-Halbzeug
- 10: Membran
- 11: Dichtung
- 12: Vakuumanschluss
- 13: Vakuumsack
- 14: Dichtung
- 15: Vakuumanschluss
- 16: Autoklav
- 17: Faserverbundbauteil
- 18: Ausschnitt
- 19: Dichtung
- 20: Preform-Halbzeug
- 21: Abreißgewebe
- 22: Harz

## Patentansprüche

1. Verfahren zur Herstellung eines zusammenhängenden Faserverbundbauteils, bei dem aneinander angrenzende Bereiche (5, 6) des Faserverbundbauteils in unterschiedlicher Weise aufgebaut, aber in einer gemeinsamen thermischen Behandlung ausgehärtet werden, wobei zwischen den eichen eine vakuumdichte Übergangsfolie (8) angeordnet wird, wobei die Übergangsfolie (8) eine Zusammensetzung aufweist, die sich von den Zusammensetzungen der Matrizen beider angrenzender Bereiche unterscheidet, wobei die Übergangsfolie (8) die beiden angrenzenden Bereiche (5, 6) bei der gemeinsamen thermischen Behandlung räumlich trennt, aber dauerhafte Verbindungen mit den Matrizen beider angrenzender Bereiche eingeht, wobei mit der Übergangsfolie (8) mindestens ein, einen der beiden angrenzenden Bereiche (5, 6) umschließender Evakuierungsbereich zumindest abschnittsweise begrenzt wird und wobei zwei, die beiden angrenzenden Bereiche umschließende Evakuierungsbereiche in unterschiedlicher Weise evakuiert werden, **dadurch gekennzeichnet, dass** der eine angrenzende Bereich (5) zunächst eigenständig aus einem Preform-Halbzeug (9) ausgebildet und unter abschnittsweiser Begrenzung mit der Übergangsfolie (8) umschlossen, für sich genommen evakuiert und mit Harz (22) infiltriert wird und der andere angrenzende Bereich (6) aus einem Prepreg-Halbzeug (2) ausgebildet wird, dass hieran anschließend die beiden angrenzenden Bereiche (5 und 6) zusammengebracht und aneinander angefügt werden, wobei der andere angrenzende Bereich (6) abgedichtet wird, und dass der andere angrenzende Bereich (6) bei der anschließenden gemeinsamen thermischen Behandlung zur Entfernung von überschüssiger Luft evakuiert wird.

2. Verfahren nach Anspruch 1, **dadurch gekennzeichnet, dass** vor der anschließenden gemeinsamen thermischen Behandlung das Harz (12) des einen angrenzenden Bereichs (5) vorgehärtet wird.

3. Verfahren nach Anspruch 1 oder 2, **dadurch gekennzeichnet, dass** Teile der Übergangsfolie (8), die zunächst über den Kontaktbereich mit beiden angrenzenden Bereichen (5, 6) überstehen, nach der gemeinsamen thermischen Behandlung entfernt werden.

## Claims

1. Method of manufacturing of a continuous fibre composite component, in which areas (5, 6) of the fibre composite component adjacent to each other are designed in different ways but cured in a common thermal treatment, wherein a vacuum tight transition film (8) is arranged between the areas, wherein the transition film (8) has a composition which differs from the compositions of the matrices of both adjacent areas, wherein the transition film (8) separates the adjacent areas (5, 6) in the common thermal treatment, but enters into a durable compound with the matrices of both adjacent areas, wherein at least one evacuation area including one of the two adjacent areas (5, 6) is at least partially delimited by the transition film, and wherein evacuation areas enclosing the two adjacent areas are evacuated in different ways, **characterized in that** the one adjacent area (5) is first discretely made of a semi-finished preform product (9) and enclosed partially delimited by the transition film (8), evacuated separately and infiltrated with resin (22), and the other adjacent area (6) is made of a semi-finished prepreg product (2), and that the two adjacent areas (5, 6) are subsequently put and fitted together, wherein the other adjacent area (6) is sealed, and that the other adjacent area (6) is evacuated for removing of excess air during the subsequent common thermal treatment.

2. Method of claim 1, **characterized in that** the resin (12) of the one adjacent area (5) is pre-cured prior to the subsequent common thermal treatment.

3. Method of claim 1 or 2, **characterized in that** all parts of the transition film (8) which initially protrude over the contact area with both adjacent areas (5, 6) are removed after the common thermal treatment.

## Revendications

1. Procédé de fabrication d'un élément composite cohérent renforcé par des fibres, dans lequel des zones adjacentes (5, 6) de l'élément composite renforcé par des fibres sont structurées de manière différente, mais sont durcies dans un traitement thermique commun, une feuille de transition (8) étanche au vide étant disposée entre les zones, ladite feuille de transition (8) ayant une composition différente des compositions des matrices des deux zones adjacentes, ladite feuille de transition (8) séparant physiquement les deux zones adjacentes (5, 6) lors du traitement thermique commun, mais établissant des liaisons durables avec les matrices des deux zones adjacentes, ladite feuille de transition (8) délimitant au moins par zones au moins une zone de production du vide entourant les deux zones (5, 6) adjacentes, et le vide étant produit de manière différente dans deux zones de production du vide entourant les deux zones adjacentes, **caractérisé en ce que** l'une des zones (5) adjacentes est réalisée d'abord de manière indépendante dans un demi-produit de préforme (9) et est entourée par la feuille de transition (8) moyennant une délimitation par zones, l'air est évacué hors de ladite zone et une résine (22) est infiltrée dans celle-ci, et l'autre zone (6) adjacente est réalisée dans un demi-produit préimprégné (2), **en ce que**, à la suite de cela, les deux zones adjacentes (5 et 6) sont réunies et sont jointes l'une à l'autre, l'autre zone (6) adjacente étant rendue étanche, et **en ce que** l'air excédentaire est évacué hors de l'autre zone (6) adjacente pendant le traitement thermique commun consécutif.

2. Procédé selon la revendication 1, **caractérisé en ce que**, avant le traitement thermique commun consécutif, la résine (12) de l'une des zones (5) adjacentes est pré-durcie.

3. Procédé selon la revendication 1 ou 2, **caractérisé en ce que** des parties de la feuille de transition (8), qui dépassent d'abord de la zone de contact avec les deux zones (5, 6) adjacentes, sont retirées après le traitement thermique commun.
